# EUROPEAN PATENT SPECIFICATION

(11) **EP 3 907 262 B1**
(45) Date of publication and mention of the grant of the patent: **01.01.2025**
(21) Application number: 21170912.6
(22) Date of filing: 28.04.2021
(51) Int. Cl.: C09D 11/38, C09D 11/40, C09D 11/54

(54) **INK, INK STORED CONTAINER, PRINTING DEVICE, PRINTING METHOD, AND INK SET**
TINTE, TINTENSPEICHERBEHÄLTER, DRUCKVORRICHTUNG, DRUCKVERFAHREN UND TINTENSATZ
ENCRE, RÉCIPIENT D'ENCRE STOCKÉ, DISPOSITIF D'IMPRESSION, PROCÉDÉ D'IMPRESSION ET KIT D'ENCRE

(30) Priority: 08.05.2020 JP 2020082420
(43) Date of publication of application: 10.11.2021
(73) Proprietor: Ricoh Company, Ltd., Tokyo 143-8555 (JP)
(72) Inventor: TAMAI, Takashi, Tokyo, 143-8555 (JP); HANAZAWA, Atsufumi, Tokyo, 143-8555 (JP); KOJIMA, Sayuri, Tokyo, 143-8555 (JP); KUROHA, Mizuki, Tokyo, 143-8555 (JP); SHIMURA, Naoto, Tokyo, 143-8555 (JP); NAKAMURA, Yuta, Tokyo, 143-8555 (JP)
(74) Representative: Marks & Clerk LLP

(56) References cited:
- JP-A- H10 130 556
- US-A- 2 671 116
- US-A1- 2013 155 145
- US-A1- 2014 204 156
- US-A1- 2016 002 481
- US-B2- 7 812 068

## Description

### BACKGROUND OF THE INVENTION

### Field of the Invention

The present disclosure relates to an ink, an ink stored container, a printing device, a printing method, and an ink set.

### Description of the Related Art

Inkjet printing devices have advantages such as low noise, low running cost, and ease of color printing and have become widespread in general households as digital signal output devices. In recent years, inkjet techniques have been utilized not only for home use but also for commercial applications and industrial applications.

Print media used for commercial applications and industrial applications may be coated paper (coat paper) for printing having low ink absorbability and plastic media having no ink absorbability. For these kinds of media, therefore, there is a demand to achieve image quality comparable to traditional offset printing by an inkjet printing method.

In addition, since commercial applications and industrial applications require high productivity, a line-head system, where printing is performed at one time with the inkjet head fixed, may be employed instead of a serial-head system, which is a traditional system where printing is performed by driving an inkjet head twice or more.

Japanese Unexamined Patent Application Publication No. 2017-222767 discloses, in the Examples, an ink composition containing a polyoxyalkylene alkyl ether-type surfactant and an acetylene glycol-type surfactant. Inkjet inks comprising polyoxyalkylene alkyl ethers are also disclosed in US 2016/002481 A1; US 7 812 068 B2; JP H10 130556 A; US 2014/204156 A1; US 2013/155145 A1 and US 2 671 116 A.

### SUMMARY OF THE INVENTION

According to one aspect of the present disclosure, an ink includes: a polyoxyalkylene alkyl ether represented by General Formula (1) below; an alkanediol; and a silicone-based compound in an amount of 0.2% by mass or more but 1.0% by mass or less relative to a mass of the ink, wherein a mass ratio of an amount of the polyoxyalkylene alkyl ether represented by the General Formula (1) to an amount of the silicone-based compound is 2.0 or more but 4.0 or less:

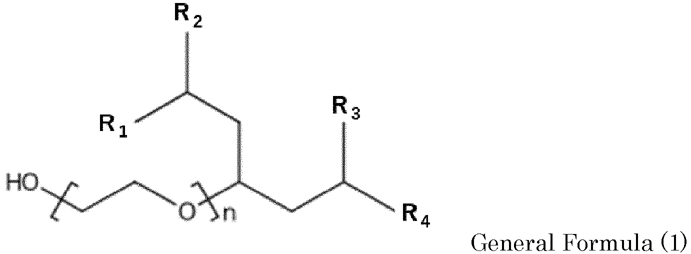

In the above General Formula (1), R₁, R₂, R₃, and R₄ each independently represent a hydrogen atom or an alkyl group having 1 or more but 5 or less carbon atoms, and n represents an integer of 4 or more but 10 or less.

### BRIEF DESCRIPTION OF THE DRAWINGS

FIG. 1 is a perspective view illustrating one example of a printing device; and
FIG. 2 is a perspective view illustrating one example of a main tank.

### DESCRIPTION OF THE EMBODIMENTS

Hereinafter, one embodiment of the present disclosure will be described.

### <<Ink>>

The ink in the present embodiment includes a polyoxyalkylene alkyl ether, an alkanediol, and a silicone-based compound. If necessary, the ink may include, for example, an organic solvent, a coloring material, a resin, water, and other additives.

The present disclosure has an object to provide an ink excellent in discharge stability and beading suppression.

According to the present disclosure, it is possible to provide an ink excellent in discharge stability and beading suppression.

### <Polyoxyalkylene Alkyl Ether>

The ink includes a polyoxyalkylene alkyl ether. The polyoxyalkylene alkyl ether is represented by General Formula (1) below. When the polyoxyalkylene alkyl ether represented by General Formula (1) below is included in the ink, ink dots formed after application of the ink on, for example, print media become easily wetted and spread. As a result, even when the applied ink is a small droplet, image density is improved. The ink that is uniformly and thinly spread on the surface of, for example, print media can reduce the amount of the ink to be applied, while maintaining the image density, and can improve beading suppression. As used herein, beading refers to unevenness in concentration occurring due to localization of a coloring material in the ink caused by convection generated in the ink droplet. Improvement in beading suppression refers to suppressed occurrence of beading.

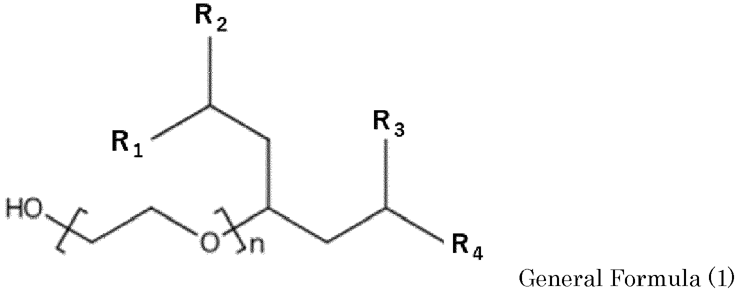

R₁, R₂, R₃, and R₄ in the General Formula (1) each independently represent a hydrogen atom or an alkyl group having 1 or more but 5 or less carbon atoms.

The alkyl group having from 1 through 5 carbon atoms may be a branched alkyl group or a non-branched alkyl group. Examples thereof include a methyl group, an ethyl group, a propyl group, an isopropyl group, a n-butyl group, a s-butyl group, an isobutyl group, a t-butyl group, a pentyl group, an isopentyl group, and a neopentyl group.

"n" in the General Formula (1) represents an integer of 4 or more but 10 or less.

The polyoxyalkylene alkyl ether represented by the General Formula (1) is not particularly limited and may be appropriately selected depending on the intended purpose. It is more preferably a compound represented by General Formula (3) below. Examples of commercially available products included in the compound represented by the General Formula (3) include TRITON HW-1000 (available from The Dow Chemical Company).

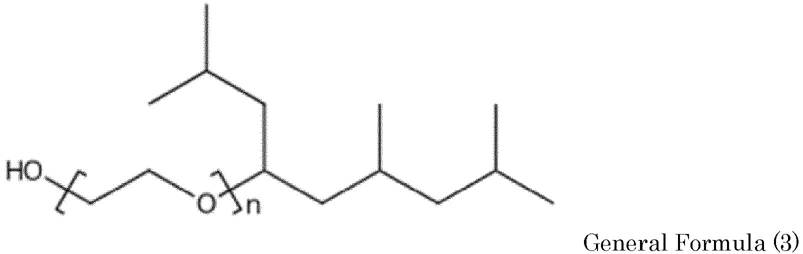

"n" in the General Formula (3) represents an integer of 4 or more but 10 or less.

The amount of the polyoxyalkylene alkyl ether represented by the General Formula (1) is preferably 0.3% by mass or more but 2.0% by mass or less, more preferably 0.4% by mass or more but 2.0% by mass or less, further preferably 0.4% by mass or more but 1.5% by mass or less, particularly preferably 0.4% by mass or more but 1.0% by mass or less, relative to the mass of the ink. When it is 0.3% by mass or more but 2.0% by mass or less, image density and beading suppression can be better improved.

### <Alkanediol>

The ink includes an alkanediol. When the alkanediol is included in the ink, foamability of the ink can be suppressed. This makes it possible to suppress discharge failure of the ink due to foams generated in the ink. Also, permeability of the ink is improved to be able to suppress the ink applied to, for example, print media from remaining on the print media as droplets for a long period of time. This leads to improvement in beading suppression by virtue of suppressed convection in the ink droplet. When the print media used are low-permeating, the ink droplet remains on the surfaces of the print media for a longer period of time, raising a problem with beading. For such low-permeating print media, the ink of the present disclosure is preferably used.

The alkanediol is not particularly limited as long as it can improve discharge stability and beading suppression. It is, for example, a compound represented by General Formula (4) below.

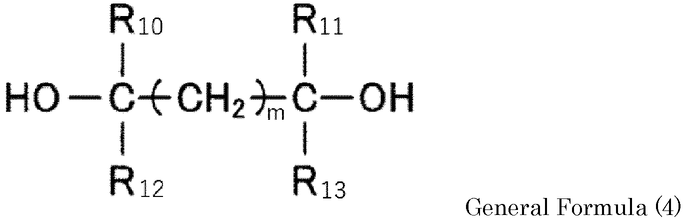

R₁₀ and R₁₁ in the General Formula (4) each independently represent an alkyl group having 3 or more but 6 or less carbon atoms.

R₁₂ and R₁₃ in the General Formula (4) each independently represent a methyl group or an ethyl group.

"m" in the General Formula (4) represents an integer of 1 or more but 6 or less.

Specific alkanediols are not particularly limited as long as they can improve discharge stability and beading suppression. Examples thereof include 2,4,7,9-tetramethyl-4,7-decanediol. A commercially available product of 2,4,7,9-tetramethyl-4,7-decanediol is, for example, ENVIROGEM AD-01 (available from Nissin Chemical Industry Co., Ltd.).

The amount of the alkanediol is preferably 0.2% by mass or more but 1.0% by mass or less, more preferably 0.3% by mass or more but 1.0% by mass or less, relative to the mass of the ink. When it is 0.2% by mass or more but 1.0% by mass or less, discharge stability and beading suppression can be better improved.

### <Silicone-based Compound>

The ink includes a silicone-based compound such as a silicone-based surfactant. When the silicone-based compound is included in the ink, it is possible to easily peel off matter adhering to the periphery of an ink discharge hole (e.g., the nozzle-forming surface of an inkjet head) after drying and adhering of the ink. As a result, discharge failure of the ink due to the adhered matter can be suppressed. Even when using, as an ink discharging unit, a line head that forms an adhered matter more easily than in a serial head, discharge failure of the ink can be suppressed. Also, permeability of the ink is improved to be able to suppress the ink applied to, for example, print media from remaining on the print media as droplets for a long period of time. This leads to improvement in beading suppression by virtue of suppressed convection in the ink droplet. When the print media used are low-permeating, the ink droplet remains on the surfaces of the print media for a longer period of time, raising a problem with beading. For such low-permeating print media, the ink of the present disclosure is preferably used.

The silicone-based compound is not particularly limited as long as it can improve discharge stability and beading suppression. It is, for example, a compound represented by General Formula (5) below.

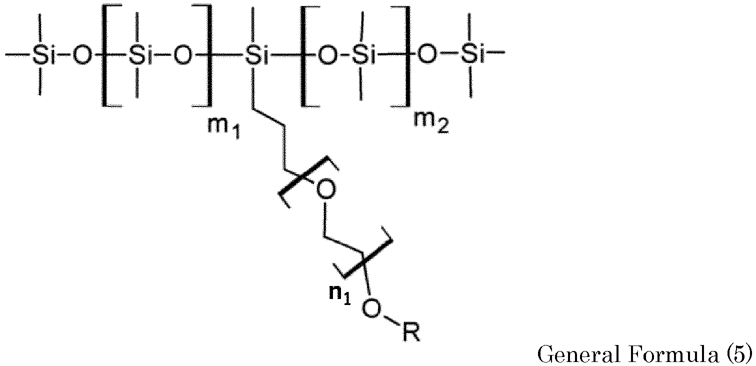

In the General Formula (5), R represents a hydrogen atom or a methyl group, m₁ and m₂ each independently represent an integer of 0 or more but 6 or less, and n₁ represents an integer of 2 or more but 20 or less.

Specific silicone-based compounds are not particularly limited as long as they can improve discharge stability and beading suppression. Examples thereof include BYK-345, 347, 348, and 349 (available from BYK Co.), WET240, 270, and 280 (available from Evonik Co.), and SAG002, 013, and 503A (available from Nissin Chemical Industry Co., Ltd.).

The amount of the silicone-based compound is 0.2% or more but 1.0% by mass or less, preferably 0.2% by mass or more but 1.0% by mass or less, particularly preferably 0.2% by mass or more but 0.5% by mass or less, more particularly preferably 0.2% by mass or more but 0.3% by mass or less, relative to the mass of the ink. When it is 0.2% by mass or more but 1.0% by mass or less, discharge stability and beading suppression can be better improved.

A mass ratio of the amount of the polyoxyalkylene alkyl ether represented by the General Formula (1) to the amount of the silicone-based compound (the amount of the polyoxyalkylene alkyl ether represented by the General Formula (1)/the amount of the silicone-based compound) is 2.0 or more but 4.0 or less, preferably 2.5 or less but 3.0 or less. When it is 2.0 or more but 4.0 or less, discharge stability and beading suppression can be better improved.

### <Organic Solvent>

There is no specific limitation on the type of the organic solvent used in the present disclosure. For example, water-soluble organic solvents are suitable. Specific examples thereof include, but are not limited to, polyols, ethers such as polyol alkyl ethers and polyol aryl ethers, nitrogen-containing heterocyclic compounds, amides, amines, and sulfur-containing compounds.

Specific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, triethylene glycol, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; polyol aryl ethers such as ethylene glycol monophenylether and ethylene glycol monobenzyl ether; nitrogen-containing heterocyclic compounds such as 2-pyrolidone, N-methyl-2-pyrolidone, N-hydroxyethyl-2-pyrolidone, 1,3-dimethyl-2-imidazolidinone, ε-caprolactam, and y-butyrolactone; amides such as formamide, N-methylformamide, N,N-dimethylformamide, 3-methoxy-N,N-dimethylpropioneamide, and 3-buthoxy-N,N-dimethylpropioneamide; amines such as monoethanolamine, diethanolamine, and triethylamine; sulfur-containing compounds such as dimethyl sulfoxide, sulfolane, and thiodiethanol; propylene carbonate, and ethylene carbonate. Since the water-soluble organic solvent serves as a humectant and also imparts a good drying property, it is preferable to use an organic solvent having a boiling point of 250 degrees C or lower.

Polyol compounds having eight or more carbon atoms and glycol ether compounds are also suitable. Specific examples of the polyol compounds having eight or more carbon atoms include, but are not limited to, 2-ethyl-1,3-hexanediol and 2,2,4-trimethyl-1,3-pentanediol.

Specific examples of the glycol ether compounds include, but are not limited to, polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monoethyl ether; and polyol aryl ethers such as ethylene glycol monophenyl ether and ethylene glycol monobenzyl ether.

The polyol compounds having eight or more carbon atoms and glycol ether compounds enhance the permeability of ink when paper is used as a print medium.

The amount of the organic solvent in the ink is not particularly limited and may be appropriately selected depending on the intended purpose. In terms of drying properties and discharge reliability of the ink, it is preferably 10% by mass or more but 60% by mass or less, more preferably 20% by mass or more but 60% by mass or less, relative to the total amount of the ink.

### <Water>

The amount of water in the ink is not particularly limited and may be appropriately selected depending on the intended purpose. In terms of drying properties and discharge reliability of the ink, it is preferably 10% by mass or more but 90% by mass or less, more preferably 20% by mass or more but 60% by mass or less, relative to the total amount of the ink.

### <Resin>

The type of the resin contained in the ink has no particular limit. Specific examples thereof include, but are not limited to, urethane resins, polyester resins, acrylic-based resins, vinyl acetate-based resins, styrene-based resins, butadiene-based resins, styrene-butadiene-based resins, vinyl chloride-based resins, acrylic styrene-based resins, and acrylic silicone-based resins.

Particles of such resins may be also used. It is possible to mix a resin emulsion in which the resin particles are dispersed in water serving as a dispersion medium with materials such as a coloring agent and an organic solvent to obtain ink. The resin particle can be synthesized or is available on the market. It is possible to synthesize the resin particle or obtain from market. These can be used alone or in combination of the resin particles.

The volume average particle diameter of the resin particle is not particularly limited and can be suitably selected to suit to a particular application. The volume average particle diameter is preferably 10 nm or more but 1,000 nm or less, more preferably 10 nm or more but 200 nm or less, and furthermore preferably 10 nm or more but 100 nm or less to obtain good fixability and image hardness.

The volume average particle diameter can be measured by using a particle size analyzer (Nanotrac Wave-UT151, manufactured by MicrotracBEL Corp.).

The proportion of the resin is not particularly limited and can be suitably selected to suit to a particular application. In terms of fixability and storage stability of the ink, it is preferably 1% by mass or more but 30% by mass or less and more preferably 5% by mass or more 20% by mass or less, relative to the total amount of the ink.

The particle diameter of the solid portion in ink has no particular limit. For example, the maximum frequency in the maximum number conversion is preferably 20 nm or more but 1,000 nm or less and more preferably 20 nm or more but 150 nm or less to ameliorate the discharging stability and image quality such as image density. The solid portion includes resin particles, particles of pigments, etc. The particle diameter of the solid portion can be measured by using a particle size analyzer (Nanotrac Wave-UT151, manufactured by MicrotracBEL Corp).

### <Surfactant>

Examples of the surfactant are silicone-based surfactants, fluorosurfactants, amphoteric surfactants, nonionic surfactants, anionic surfactants, etc.

Specific examples of the fluorosurfactants include, but are not limited to, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain. These are particularly preferable because they do not foam easily. Specific examples of the perfluoroalkyl sulfonic acid compounds include, but are not limited to, perfluoroalkyl sulfonic acid and salts of perfluoroalkyl sulfonic acid. Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain. Counter ions of salts in these fluorosurfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

A fluorosurfactant in which the number of carbon atoms replaced with fluorine atoms is from 2 to 16 is preferable and, 4 to 16, more preferable.

Specific examples of the fluorosurfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because they do not foam easily and the fluorosurfactant represented by the following Chemical formula F-1 or Chemical formula F-2 is more preferable.

CF₃CF2(CF₂GF₂)ₘ -CH₂CH₂O(CH₂CH₂O)ₙ H Chemical formula F-1

In the Chemical formula F-1, "m" is preferably 0 or an integer of from 1 to 10 and "n" is preferably 0 or an integer of from 1 to 40.

CₙF₂ₙ₊₁₋CH₂CH (OH) CH₂-O-(CH₂CH₂O)ₐ-Y Chemical formula F-2

In the Chemical formula F-2, Y represents H, CmF₂ₘ₊₁, where "m" is an integer of from 1 to 6, H₂CH(OH)CH₂-CmF₂ₘ₊₁, where "m" represents an integer of from 4 to 6, or CₚH₂ₚ₊₁, where p represents an integer of from 1 to 19. "n" represents an integer of from 1 to 6. "a" represents an integer of from 4 to 14.

Products available on the market may be used as the fluorosurfactant. Specific examples of the products available on the market include, but are not limited to, SURFLON S-111, SURFLON S-112, SURFLON S-121, SURFLON S-131, SURFLON S-132, SURFLON S-141, and SURFLON S-145 (all manufactured by ASAHI GLASS CO., LTD.); FLUORAD FC-93, FC-95, FC-98, FC-129, FC-135, FC-170C, FC-430, and FC-431 (all manufactured by SUMITOMO 3M); MEGAFACE F-470, F-1405, and F-474 (all manufactured by DIC CORPORATION); ZONYL TBS, FSP, FSA, FSN-100, FSN, FSO-100, FSO, FS-300, UR, CAPSTONE FS-30, FS-31, FS-3100, FS-34, FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, PF-159 (manufactured by OMNOVA SOLUTIONS INC.), and UNIDYNE DSN-403N ( manufactured by DAIKIN INDUSTRIES). Of these, FS-3100, FS-34, and FS-300 (all manufactured by The Chemours Company), FT-110, FT-250, FT-251, FT-400S, FT-150, and FT-400SW (manufactured by NEOS COMPANY LIMITED), PolyFox PF-151N (manufactured by OMNOVA SOLUTIONS INC.), and UNIDYNE DSN-403N (manufactured by DAIKIN INDUSTRIES) are particularly preferable in terms of good printing quality, coloring in particular, and improvement on permeation, wettability, and uniform dyeing property to paper.

The proportion of the surfactant in the ink is not particularly limited. It is preferably 0.001% by mass or more but 5% by mass or less and more preferably 0.05% by mass or more but 5% by mass or less in terms of excellent wettability and discharging stability and improvement on image quality.

### <Other additives>

If necessary, the ink may further contain a defoaming agent, a preservative and fungicide, a corrosion inhibitor, a pH regulator, etc.

### <Ink properties>

Ink properties are not particularly limited and may be appropriately selected depending on the intended purpose. For example, viscosity, surface tension, pH, etc., are preferably in the following ranges.

The viscosity of the ink at 25 degrees C is preferably 5 mPa•s or more but 30 mPa• s or less and more preferably 5 mPa•s or more but 25 mPa•s or less to improve print density and text quality and obtain good dischargeability. The viscosity can be measured by, for example, a rotatory viscometer (RE-80L, manufactured by TOKI SANGYO CO., LTD.). The measuring conditions are as follows:
- Standard cone rotor (1°34' x R24)
- Sample liquid amount: 1.2 mL
- Number of rotations: 50 rotations per minute (rpm)
- 25 degrees C
- Measuring time: three minutes

The surface tension of the ink is preferably 35 mN/m or less and more preferably 32 mN/m or less at 25 degrees C in terms that the ink is suitably levelized on a print medium and the drying time of the ink is shortened.

The pH of the ink is preferably from 7 to 12 and more preferably from 8 to 11 in terms of prevention of corrosion of metal materials contacting the ink.

### <<Ink Set>>

The ink in the present embodiment may be used as an ink set in combination with a treatment liquid. The treatment liquid contains an aggregating agent to aggregate the components contained in the ink. The components contained in the ink are, for example, a coloring material in the ink. The treatment liquid improves the image density of an image formed with the ink. A method of using the treatment liquid includes, for example, a treatment liquid application step of applying the treatment liquid to a print medium before application of an ink, and an ink application step of applying the ink to the print medium to which the treatment liquid has been applied.

### <Treatment Liquid>

The treatment liquid contains an aggregating agent and, if necessary, may contain an organic solvent, water, other additives, etc. The organic solvent, water, other additives, etc. that can be used are those for the ink, and thus descriptions for these will be omitted.

### -Aggregating agent-

The aggregating agent is not particularly limited as long as it is a material that aggregates the components contained in the ink. Examples thereof include metal salts. The metal salts associate with the coloring material in the ink by the action of electric charges, to form aggregates of the coloring material and separate the coloring material from the liquid phase to promote fixation onto a print medium. When the metal salts are included in the treatment liquid, occurrence of beading can be suppressed even in use of, for example, a print medium having low ink absorbability, to be able to form a high-quality image.

By using the ink including the polyoxyalkylene alkyl ether represented by the General Formula (1) and the alkanediol in combination with the treatment liquid including metal salts as an aggregating agent, beading suppression can be improved regardless of the kind of a print medium (e.g., influences by the kind of paper).

The metal salts are not particularly limited and may be appropriately selected depending on the intended purpose. Examples thereof include salts of, for example, titanium compounds, chromium compounds, copper compounds, cobalt compounds, strontium compounds, barium compounds, iron compounds, aluminum compounds, calcium compounds, magnesium compounds, zinc compounds, and nickel compounds. These may be used alone or in combination. Of these, from the viewpoint of the ability to effectively aggregate the coloring material such as a pigment, salts of calcium compounds, magnesium compounds, and nickel compounds are preferable, and salts of alkaline earth metals such as calcium and magnesium are more preferable.

The metal salts are preferably ionic metal salts. In particular, the above metal salts are preferably magnesium salts.

The magnesium compounds are not particularly limited and may be appropriately selected depending on the intended purpose. Examples thereof include magnesium chloride, magnesium acetate, magnesium sulfate, magnesium nitrate, and magnesium silicate.

The calcium compounds are not particularly limited and may be appropriately selected depending on the intended purpose. Examples thereof include calcium carbonate, calcium nitrate, calcium chloride, calcium acetate, calcium sulfate, and calcium silicate.

The barium compounds are not particularly limited and may be appropriately selected depending on the intended purpose. Examples thereof include barium sulfate.

The zinc compounds are not particularly limited and may be appropriately selected depending on the intended purpose. Examples thereof include zinc sulfide and zinc carbonate.

The aluminum compounds are not particularly limited and may be appropriately selected depending on the intended purpose. Examples thereof include aluminum silicate and aluminum hydroxide.

The amount of the metal salts relative to the treatment liquid is preferably 0.85 mol/kg or more but 1.4 mol/kg or less. When the amount thereof is 0.85 mol/kg or more, occurrence of beading can be suppressed even in use of, for example, a print medium having low ink absorbability, to be able to form a high-quality image. When the amount thereof is 1.4 mol/kg or less, storage stability of the treatment liquid is improved.

### <<Print Medium>>

The print medium is not particularly limited. Specific examples thereof include, but are not limited to, plain paper, gloss paper, special paper, and cloth. The ink can be particularly suitably used for low-permeating bases (low-absorbing bases).

The low-permeating base has a surface with low moisture permeability and absorbency and includes a material having myriad of hollow spaces inside but not open to the outside. Examples of the low-permeating base include, but are not limited to, print media such as coated paper used for commercial printing, and paperboard made of a middle layer and a back layer each containing waste paper pulp and of a coated surface.

The print medium may be, for example, a cut paper sheet printable per one printing unit, and a continuous paper sheet or a roll paper sheet printable with a plurality of printing units in the conveyance direction of the print medium.

### <Low-permeating Base>

Examples of the low-permeating base include print media such as coated paper sheets each including a support, a surface layer provided on at least one surface of the support, and if necessary, further including other layers.

In the print medium including the support and the surface layer, the amount of pure water transferred to the print medium for a contact time of 100 ms as measured with a dynamic scanning absorptometer is preferably 2 mL/m² or more but 35 mL/m² or less, more preferably 2 mL/m² or more but 10 mL/m² or less.

When the amount of the ink and pure water transferred for a contact time of 100 ms is too small, beading may easily occur. When it is too large, the diameters of ink dots after image formation may become much smaller than the desired diameters.

The amount of pure water transferred to the print medium for a contact time of 400 ms as measured with a dynamic scanning absorptometer is preferably 3 mL/m² or more but 40 mL/m² or less, more preferably 3 mL/m² or more but 10 mL/m² or less.

When the amount thereof for a contact time of 400 ms is small, drying properties become insufficient. When it is too large, glossiness of an image portion after drying may be easily low. The amount of pure water transferred to the print medium for a contact time of 100 ms or 400 ms can be measured on the surface of the print medium at the side where the surface layer is provided.

It is noted that the dynamic scanning absorptometer (DSA: JAPAN TAPPI JOURNAL, Volume 48, May 1994, pp. 88-92, Shigenori Kuga) is an apparatus that can accurately measure the amount of a liquid absorbed during a very short period of time. The dynamic scanning absorptometer directly reads the absorption speed of a liquid from the movement of a meniscus in a capillary and automatically measures the amount of the liquid absorbed. The test sample is shaped like a disc. The dynamic scanning absorptometer scans one test sample by moving a liquid-absorbing head spirally over the test sample to thereby measure the amount of the liquid absorbed at as many points as necessary. The scanning speed is automatically changed according to a predetermined pattern.

A liquid supplying head that supplies liquid to the test sample is connected via a TEFLON (registered trademark) tube to the capillary. Positions of the meniscus in the capillary are automatically detected by an optical sensor. Specifically, the amount of the pure water or ink transferred was measured by a dynamic scanning absorptometer (K350 series, type D, available from Kyowa Co., Ltd.).

The amount of the pure water or ink transferred for a contact time of 100 ms or 400 ms can be obtained by interpolation, using the transfer amounts measured at time points around each contact time.

### -Support-

The support is not particularly limited and may be appropriately selected depending on the intended purpose. Examples of the material of the support include sheets of paper mainly made of wood fibers and nonwoven fabrics mainly made of wood and synthetic fibers.

The thickness of the support is not particularly limited and may be appropriately selected depending on the intended purpose. It is preferably from 50 µm through 300 µm. The basis weight of the support is preferably from 45 g/m² through 290 g/m².

### -Surface layer-

The surface layer contains a pigment, a binder (binding agent) and if necessary, further contains a surfactant and other components.

The pigment may be an inorganic pigment or a mixture of an inorganic pigment and an organic pigment. Examples of the inorganic pigment include kaolin, talc, heavy calcium carbonate, precipitated calcium carbonate, calcium sulphite, amorphous silica, titanium white, magnesium carbonate, titanium dioxide, aluminum hydroxide, calcium hydroxide, magnesium hydroxide, zinc hydroxide, and chlorite. The amount of the inorganic pigment added is preferably 50 parts by mass or more relative to 100 parts by mass of the binder.

Examples of the organic pigment include water-soluble dispersions of, for example, styrene-acrylic copolymer particles, styrene-butadiene copolymer particles, polystyrene particles, and polyethylene particles. The amount of the organic pigment added is preferably from 2 parts by mass through 20 parts by mass relative to 100 parts by mass of the total pigment of the surface layer.

The binder is preferably an aqueous resin. The aqueous resin that is suitably usable is at least one selected from the group consisting of a water-soluble resin and a water-dispersible resin. The water-soluble resin is not particularly limited and may be appropriately selected depending on the intended purpose. Examples thereof include polyvinyl alcohol, cation-modified polyvinyl alcohol, acetal-modified polyvinyl alcohol, polyester, polyurethane, and mixtures of polyester and polyurethane.

The surfactant optionally contained in the surface layer is not particularly limited and may be appropriately selected depending on the intended purpose. It may be any one of an anionic surfactant, a cationic surfactant, an amphoteric surfactant, and a nonionic surfactant.

A method of forming the surface layer is not particularly limited and may be appropriately selected depending on the intended purpose. The surface layer can be formed by impregnating the support with the liquid to constitute the surface layer or by applying that liquid onto the support. The deposition amount of the liquid to constitute the surface layer is not particularly limited and may be appropriately selected depending on the intended purpose. It is preferably from 0.5 g/m² through 20 g/m², more preferably from 1 g/m² through 15 g/m², in terms of the solid content.

### <<Printing Device and Method>>

The ink of the present embodiment can be suitably applied to various printing devices employing an inkjet printing method such as printers, facsimile machines, photocopiers, multifunction peripherals (serving as a printer, a facsimile machine, and a photocopier), and 3D model manufacturing devices (3D printers, additive manufacturing devices).

In the present disclosure, the printing device and the printing method represent a device capable of discharging ink, various processing fluids, etc. to a print medium and a method printing an image on the print medium using the device. The print medium means an article to which the ink or the various processing fluids can be attached at least temporarily.

The printing device may further optionally include a device relating to feeding, transferring, and ejecting the print medium and other devices referred to as a preprocessing device, a post-processing device, etc. in addition to the head portion to discharge the ink.

The printing device and the printing method may further optionally include a heater for use in the heating process and a drier for use in the drying process. For example, the heating device and the drying device heat and dry the top surface and the bottom surface of a print medium having an image. The heating device and the drying device are not particularly limited. For example, a fan heater and an infra-red heater can be used. The print medium can be heated and dried before, during, and after printing.

When an infra-red heater is used as the heater or the drier, the infra-red heater includes at least a near infra-red irradiator. A known device of the near infra-red irradiator is composed of a halogen lamp and a reflection mirror. Examples of products where the halogen heater is incorporated into the reflection mirror to form a heating unit in an attempt to achieve efficient heating include UH-USC-CL300, UHUSC-CL700, UH-USC-CL1000, UH-USD-CL300, UHUSD-CL700, UH-USD-CL1000, UH-MA1-CL300, UHMA1-CL700, and UH-MA1-CL1000 (all of which are available from Ushio Inc.).

In addition, the printing device and the printing method are not limited to those producing merely meaningful visible images such as texts and figures with the ink. For example, the printing device and the printing method can produce patterns like geometric design and 3D images.

In addition, the printing device includes both a serial type device in which the liquid discharging head is caused to move and a line type device in which the liquid discharging head is not moved, unless otherwise specified.

Furthermore, in addition to the desktop type, this printing device includes a wide type capable of printing images on a large print medium such as A0, a continuous printer capable of using continuous paper wound up in a roll form as print media.

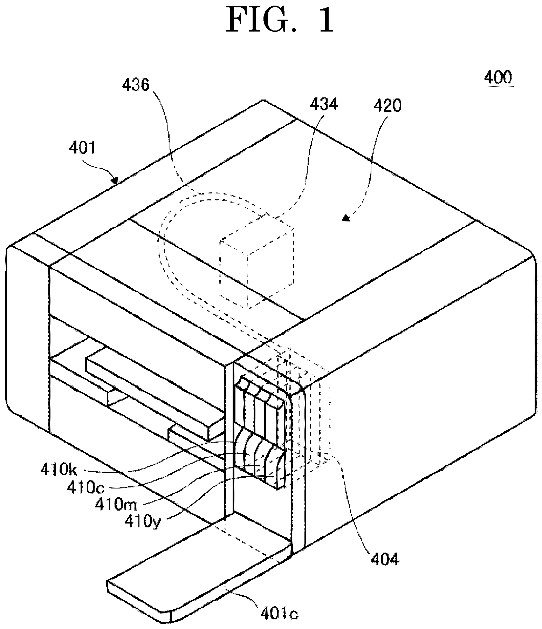

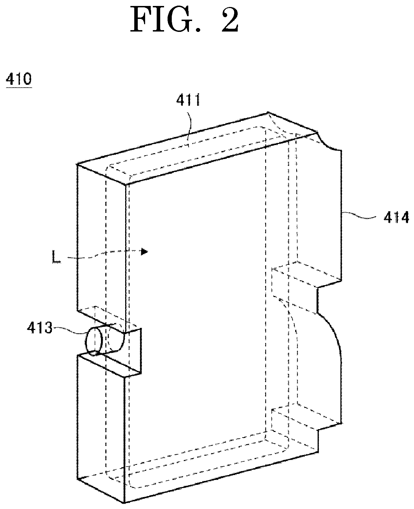

The printing device of the present disclosure is described using an example with reference to FIG. 1 and FIG. 2. FIG. 1 is a perspective view illustrating the image printing device. FIG. 2 is a perspective view illustrating the main tank. An image forming apparatus 400 as an example of the printing device is a serial type image forming apparatus. A mechanical unit 420 is disposed in an exterior 401 of the image forming apparatus 400. Each ink accommodating unit (ink container) 411 of each main tank 410 (410k, 410c, 410m, and 410y) for each color of black (K), cyan (C), magenta (M), and yellow (Y) is made of a packing member such as aluminum laminate film. The ink container 411 is accommodated in a plastic housing unit 414. As a result, the main tank 410 is used as an ink cartridge of each color.

A cartridge holder 404 is disposed on the rear side of the opening when a cover 401c is opened. The cartridge holder 404 is detachably attached to the main tank 410. As a result, each ink discharging outlet 413 of the main tank 410 is communicated with a discharging head 434 for each color via a supplying tube 436 for each color so that the ink can be discharged from the discharging head 434 to a print medium.

The method of using the ink is not limited to the inkjet printing method and the ink can be used by a wide variety of methods. In addition to the inkjet printing method, a blade coating method, a gravure coating method, a bar coating method, a roll coating method, a dip coating method, a curtain coating method, a slide coating method, a die coating method, a spray coating method, etc. may be used.

### Examples

The present disclosure will be described below by way of Examples, but should not be construed as being limited to these Examples in any way.

### <Preparation of Pigment Dispersion Liquid>

### -Preparation of black pigment dispersion liquid-

90 g of carbon black having a CTAB specific surface area of 150 m²/g and a DBP oil absorption amount of 100 mL/100 g was added to 3,000 mL of a 2.5N sodium sulfate solution. The resultant mixture was stirred at 60°C and 300 rpm to be allowed to react for 10 hours for an oxidation treatment. The obtained reaction liquid was filtrated. The carbon black separated through filtration was neutralized with a sodium hydroxide solution, followed by ultrafiltration. The obtained carbon black was washed with water, dried, and dispersed in pure water so that the pigment concentration would be 15% by mass, to obtain a black pigment dispersion liquid.

### -Preparation of yellow pigment dispersion liquid-

C.I. Pigment Yellow 128 as a yellow pigment was subjected to a low-temperature plasma treatment to produce a yellow pigment to which a carboxylic acid group was introduced. This was dispersed in ion-exchanged water. The resultant mixture was subjected to desalting concentration using an ultrafiltration membrane, to obtain a yellow pigment dispersion liquid having a pigment concentration of 15% by mass.

### -Preparation of magenta pigment dispersion liquid-

C.I. Pigment Red 122 as a magenta pigment was subjected to a low-temperature plasma treatment to produce a magenta pigment to which a carboxylic acid group was introduced. This was dispersed in ion-exchanged water. The resultant mixture was subjected to desalting concentration using an ultrafiltration membrane, to obtain a magenta pigment dispersion liquid having a pigment concentration of 15% by mass.

### -Preparation of cyan pigment dispersion liquid-

C.I. Pigment Blue 15:3 as a cyan pigment was subjected to a low-temperature plasma treatment to produce a cyan pigment to which a carboxylic acid group was introduced. This was dispersed in ion-exchanged water. The resultant mixture was subjected to desalting concentration using an ultrafiltration membrane, to obtain a cyan pigment dispersion liquid having a pigment concentration of 15% by mass.

### <Preparation of Inks>

### (Examples 1 to 8 and Comparative Examples 1 to 28)

The materials presented in Tables 1 to 3 below were mixed and stirred in the respective amounts presented in the tables, followed by filtration through a 1.5-µm polypropylene filter, to prepare inks of Examples 1 to 8 and Comparative Examples 1 to 28. Incidentally, the units of the numerical values in Tables 1 to 3 are "% by mass".

The components in Tables 1 to 3 are the following materials.
SUPERFLEX 150 (a urethane resin, obtained from DKS Co. Ltd.)
MOVINYL 5450 (a styrene acrylic resin, obtained from NIHON GOSEI KAKO Co., Ltd.)
TRITON HW-1000 (a polyoxyalkylene alkyl ether, obtained from The Dow Chemical Company)
ENVIROGEM AD-01(an alkanediol (2,4,7,9-tetramethyl-4,7-decanediol), obtained from Nissin Chemical Industry Co., Ltd.)
TEGO Wet 270 (a silicone-based compound, obtained from Evonik Co.)
CAPSTONE FS-34 (a fluorosurfactant, obtained from The Chemours Company)
PROXEL LV (a preservative and fungicide, obtained from Avecia Co.)

The obtained inks and ink sets were evaluated for "beading suppression", "defoamability", "discharge stability", and "nozzle adhesion" in the following manners. Results are presented in Tables 1 to 3.

### [Beading Suppression]

Each of the prepared inks was printed on a print medium (low-permeating base, product name: Lumi Art Gross 130). A solid image was printed using an image forming device (device name: IPSIO GXe5500, obtained from Ricoh Company, Limited) with "Gloss Paper & Fine mode" and "No Color Correction".

The solid image was visually observed for beading (unevenness in density) to evaluate "beading suppression" according to the following evaluation criteria. Ranks AA, A and B are preferable.

When the ink set was used, the treatment liquid was applied to a print medium before printing with the ink. Specifically, a wire bar (diameter of a wound wire: 0.02 mm, obtained from Kobayashi Engineering Works, Ltd.) was used to uniformly apply the prepared treatment liquid to the print medium. The print medium to which the treatment liquid had been applied was dried in an oven (90°C, 30 seconds).

### (Evaluation Criteria)

AA: Unevenness in density was not found.
A: Unevenness in density was found from a position at a distance of 15 cm.
B: Unevenness in density was found from a position at a distance of 30 cm.
C: Unevenness in density was found from a position at a distance of 1.0 m.
D: Unevenness in density was found from a position at a distance of 1.5 m.

### [Defoamability]

Each (10 ml) of the prepared inks was charged into a 100 ml-measuring cylinder. At 25°C, air was injected at a certain pressure into the cylinder until the total volume of the ink and bubbles would be 100 ml. The time taken for all of the generated bubble to disappear was defined as a defoaming time, based on which "Defoamability" was evaluated according to the following evaluation criteria. Ranks AA and A are preferable.

### (Evaluation Criteria)

AA: The defoaming time was shorter than 10 seconds.
A: The defoaming time was 10 seconds or longer but shorter than 60 seconds.
B: The defoaming time was 60 seconds or longer but shorter than 120 seconds.
C: The defoaming time was 120 seconds or longer but shorter than 300 seconds.
D: The defoaming time was 300 seconds or longer.

### [Discharge Stability]

An inkjet printer (IPSIO GXe3300, obtained from Ricoh Company, Limited) was filled with each of the prepared inks, which were subjected to the initial filling operation. A nozzle check pattern was printed to confirm that there was no discharge failure (no discharge or bent discharge of the nozzles) in the nozzle check pattern. Next, printing was performed on a print medium (MY PAPER, obtained from Ricoh Company, Limited). A pattern to be printed was a chart having a print area of 5% relative to the total area of a paper sheet, and was printed with 100% duty. Printing conditions were set to a print density of 360 dpi and one-pass printing. After the above chart had been continuously printed on 20 paper sheets, a suspended state was provided where discharge was not performed for 20 minutes. A procedure of these printing and suspending was repeated 50 times to print a total of 1,000 paper sheets. After that, a nozzle check pattern was printed to confirm the presence or absence of discharge failure (no discharge or bent discharge of the nozzles). Specifically, the nozzle check pattern was visually observed for the presence of absence of white voids and turbulent jetting, to evaluate "Discharge Stability" according to the following evaluation criteria. Rank A is preferable.

### (Evaluation Criteria)

A: White voids and turbulent jetting were not observed.
B: White voids and turbulent jetting were slightly observed.
C: White voids and turbulent jetting were observed at the first scanning.
D: White voids and turbulent jetting were entirely observed.

### [Nozzle Adhesion]

Each (0.2 g) of the prepared inks was dropped to a SUS plate and left to stand for 3 days at normal temperature. The plate was immersed in water for 5 minutes and then taken out. The plate was visually observed for how much of the adhered ink remained, to evaluate "Nozzle Adhesion" according to the following evaluation criteria. Ranks A and B are preferable.

### (Evaluation Criteria)

A: Any trace of the adhered ink did not remain.
B: A trace of the adhered ink slightly remained.
C: The adhered ink remained thinly.
D: The adhered ink remained.

**Table 1**

| | | Example (Ink) | | | | | | | |
|---|---|---|---|---|---|---|---|---|---|
| | | 1 | 2 | 3 | 4 | 5 | 6 | 7 | 8 |
| Organic solvent | 1,3-Butanediol | 23.0 | 23.0 | 23.0 | | 23.0 | 23.0 | 23.0 | |
| | 1,5-Pentanediol | | | | 22.5 | | | | 22.5 |
| | Glycerin | 8.0 | 8.0 | 8.0 | 7.5 | 8.0 | 8.0 | 8.0 | 7.5 |
| | 2-Ethyl-1,3-hexanediol | 2.0 | 2.0 | 2.0 | 2.0 | 2.0 | 2.0 | 2.0 | 2.0 |
| | 2-Pyrrolidone | | | | 2.0 | | | | 2.0 |
| Resin | SUPERFLEX 150 | 4.0 | 4.0 | 4.0 | 4.0 | 5.0 | 5.0 | 5.0 | 5.0 |
| | MOVINYL 5450 | 10.0 | 10.0 | 10.0 | 10.0 | 6.0 | 6.0 | 6.0 | 6.0 |
| Polyoxy-alkylene alkyl ether | TRITON HW-1000 | 0.9 | 0.9 | 0.9 | 0.8 | 0.5 | 0.5 | 0.5 | 0.5 |
| Alkanediol | ENVIROGEM AD-01 | 0.3 | 0.3 | 0.3 | 0.3 | 0.2 | 0.2 | 0.2 | 0.2 |
| Silicone-based compound | TEGO Wet 270 | 0.3 | 0.3 | 0.3 | 0.3 | 0.2 | 0.2 | 0.2 | 0.2 |
| Preservative and fungicide | PROXEL LV | 0.2 | 0.2 | 0.2 | 0.2 | 0.2 | 0.2 | 0.2 | 0.2 |
| pH regulator | 2-Amino-2-ethyl-1,3-propanediol | 0.3 | 0.3 | 0.3 | 0.3 | 0.3 | 0.3 | 0.3 | 0.3 |
| Pigment dispersion liquid | Yellow pigment dispersion liquid | 20.0 | | | | 20.0 | | | |
| | Magenta pigment dispersion liquid | | 20.0 | | | | 20.0 | | |
| | Cyan pigment dispersion liquid | | | 20.0 | | | | 20.0 | |
| | Black pigment dispersion liquid | | | | 20.0 | | | | 20.0 |
| Water | High pure water | Bal.* | Bal. | Bal. | Bal. | Bal. | Bal. | Bal. | Bal. |
| Total amount | | 100 | 100 | 100 | 100 | 100 | 100 | 100 | 100 |
| Polyoxyalkylene alkyl ether/ Silicone-based compound | | 3.0 | 3.0 | 3.0 | 2.7 | 2.5 | 2.5 | 2.5 | 2.5 |
| Evaluation results | Beading suppression | AA | AA | AA | AA | A | A | A | A |
| | Defoamability | A | A | A | A | A | A | A | A |
| | Discharge stability | A | A | A | A | A | A | A | A |
| | Nozzle adhesion | A | A | A | A | A | A | A | A |

| | | | | | | | | | |
|---|---|---|---|---|---|---|---|---|---|
| *Bal. is an abbreviation of balance. | | | | | | | | | |

(Continued)

| | | Comparative Example (Ink) | | | |
|---|---|---|---|---|---|
| | | 1 | 2 | 3 | 4 |
| Organic solvent | 1,3-Butanediol | 23.0 | 23.0 | 23.0 | |
| | 1,5-Pentanediol | | | | 22.5 |
| | Glycerin | 8.0 | 8.0 | 8.0 | 7.5 |
| | 2-Ethyl-1,3-hexanediol | 2.0 | 2.0 | 2.0 | 2.0 |
| | 2-Pyrrolidone | | | | 2.0 |
| Resin | SUPERFLEX 150 | 1.0 | 1.0 | 1.0 | 1.0 |
| | MOVINYL 5450 | 1.0 | 1.0 | 1.0 | 1.0 |
| Polyoxy-alkylene alkyl ether | TRITON HW-1000 | 0.3 | 0.3 | 0.3 | 0.3 |
| Alkanediol | ENVIROGEM AD-01 | 0.7 | 0.7 | 0.7 | 0.7 |
| Silicone-based compound | TEGO Wet 270 | 0.1 | 0.1 | 0.1 | 0.1 |
| Preservative and fungicide | PROXEL LV | 0.2 | 0.2 | 0.2 | 0.2 |
| pH regulator | 2-Amino-2-ethyl-1,3-propanediol | 0.3 | 0.3 | 0.3 | 0.3 |
| Pigment dispersion liquid | Yellow pigment dispersion liquid | 20.0 | | | |
| | Magenta pigment dispersion liquid | | 20.0 | | |
| | Cyan pigment dispersion liquid | | | 20.0 | |
| | Black pigment dispersion liquid | | | | 20.0 |
| Water | High pure water | Bal.* | Bal. | Bal. | Bal. |
| Total amount | | 100 | 100 | 100 | 100 |
| Polyoxyalkylene alkyl ether/ Silicone-based compound | | 3.0 | 3.0 | 3.0 | 3.0 |
| Evaluation results | Beading suppression | B | B | B | B |
| | Defoamability | AA | AA | AA | AA |
| | Discharge stability | A | A | A | A |
| | Nozzle adhesion | A | A | A | A |

| | | | | | |
|---|---|---|---|---|---|
| *Bal. is an abbreviation of balance. | | | | | |

**Table 2**

| | | Comparative Example (Ink) | | | | | | | |
|---|---|---|---|---|---|---|---|---|---|
| | | 5 | 6 | 7 | 8 | 9 | 10 | 11 | 12 |
| Organic solvent | 1,3-Butanediol | 23.0 | 23.0 | 23.0 | | 23.0 | 23.0 | 23.0 | |
| | 1,5-Pentanediol | | | | 22.5 | | | | 22.5 |
| | Glycerin | 8.0 | 8.0 | 8.0 | 7.5 | 8.0 | 8.0 | 8.0 | 7.5 |
| | 2-Ethyl-1,3-hexanediol | 2.0 | 2.0 | 2.0 | 2.0 | 2.0 | 2.0 | 2.0 | 2.0 |
| | 2-Pyrrolidone | | | | 2.0 | | | | 2.0 |
| Resin | SUPERFLEX 150 | 1.0 | 1.0 | 1.0 | 1.0 | 5.0 | 5.0 | 5.0 | 5.0 |
| | MOVINYL 5450 | 5.0 | 5.0 | 5.0 | 5.0 | 5.0 | 5.0 | 5.0 | 5.0 |
| Polyoxy-alkylene alkyl ether | TRITON HW-1000 | 1.5 | 1.5 | 1.5 | 1.5 | 0.9 | 0.9 | 0.9 | 0.9 |
| Alkanediol | ENVIROGEM AD-01 | | | | | | | | |
| Silicone-based compound | TEGO Wet 270 | | | | | | | | |
| Fluoro Surfactant | CAPSTONE FS-34 | | | | | | | | |
| Preservative and fungicide | PROXEL LV | 0.2 | 0.2 | 0.2 | 0.2 | 0.2 | 0.2 | 0.2 | 0.2 |
| pH regulator | 2-Amino-2-ethyl-1,3-propanediol | 0.3 | 0.3 | 0.3 | 0.3 | 0.3 | 0.3 | 0.3 | 0.3 |
| Pigment dispersion liquid | Yellow pigment dispersion liquid | 20.0 | | | | 20.0 | | | |
| | Magenta pigment dispersion liquid | | 20.0 | | | | 20.0 | | |
| | Cyan pigment dispersion liquid | | | 20.0 | | | | 20.0 | |
| | Black pigment dispersion liquid | | | | 20.0 | | | | 20.0 |
| Water | High pure water | Bal.* | Bal. | Bal. | Bal. | Bal. | Bal. | Bal. | Bal. |
| Total amount | | 100 | 100 | 100 | 100 | 100 | 100 | 100 | 100 |
| Polyoxyalkylene alkyl ether/ Silicone-based compound | | - | - | - | - | - | - | - | - |
| Evaluation results | Beading suppression | B | B | B | B | A | A | A | A |
| | Defoamability | B | B | B | B | B | B | B | B |
| | Discharge stability | B | B | B | B | B | B | B | B |
| | Nozzle adhesion | B | B | B | B | B | B | B | B |

| | | | | | | | | | |
|---|---|---|---|---|---|---|---|---|---|
| *Bal. is an abbreviation of balance. | | | | | | | | | |

(Continued)

| | | Comparative Example (Ink) | | | | | | | |
|---|---|---|---|---|---|---|---|---|---|
| | | 13 | 14 | 15 | 16 | 17 | 18 | 19 | 20 |
| Organic solvent | 1,3-Butanediol | 23.0 | 23.0 | 23.0 | | 23.0 | 23.0 | 23.0 | |
| | 1,5-Pentanediol | | | | 22.5 | | | | 22.5 |
| | Glycerin | 8.0 | 8.0 | 8.0 | 7.5 | 8.0 | 8.0 | 8.0 | 7.5 |
| | 2-Ethyl-1,3-hexanediol | 2.0 | 2.0 | 2.0 | 2.0 | 2.0 | 2.0 | 2.0 | 2.0 |
| | 2-Pyrrolidone | | | | 2.0 | | | | 2.0 |
| Resin | SUPERFLEX 150 | 1.0 | 1.0 | 1.0 | 1.0 | 2.0 | 2.0 | 2.0 | 2.0 |
| | MOVINYL 5450 | 10.0 | 10.0 | 10.0 | 10.0 | 6.0 | 6.0 | 6.0 | 6.0 |
| Polyoxy-alkylene alkyl ether | TRITON HW-1000 | | | | | | | | |
| Alkanediol | ENVIROGEM AD-01 | 0.5 | 0.5 | 0.5 | 0.5 | | | | |
| Silicone-based compound | TEGO Wet 270 | | | | | 0.3 | 0.3 | 0.3 | 0.3 |
| Fluoro Surfactant | CAPSTONE FS-34 | | | | | | | | |
| Preservative and fungicide | PROXEL LV | 0.2 | 0.2 | 0.2 | 0.2 | 0.2 | 0.2 | 0.2 | 0.2 |
| pH regulator | 2-Amino-2-ethyl-1,3-propanediol | 0.3 | 0.3 | 0.3 | 0.3 | 0.3 | 0.3 | 0.3 | 0.3 |
| Pigment dispersion liquid | Yellow pigment dispersion liquid | 20.0 | | | | 20.0 | | | |
| | Magenta pigment dispersion liquid | | 20.0 | | | | 20.0 | | |
| | Cyan pigment dispersion liquid | | | 20.0 | | | | 20.0 | |
| | Black pigment dispersion liquid | | | | 20.0 | | | | 20.0 |
| Water | High pure water | Bal.* | Bal. | Bal. | Bal. | Bal. | Bal. | Bal. | Bal. |
| Total amount | | 100 | 100 | 100 | 100 | 100 | 100 | 100 | 100 |
| Polyoxyalkylene alkyl ether/ Silicone-based compound | | - | - | - | - | - | - | - | - |
| Evaluation results | Beading suppression | D | D | D | D | C | C | C | C |
| | Defoamability | AA | AA | AA | AA | D | D | D | D |
| | Discharge stability | B | B | B | B | C | C | C | C |
| | Nozzle adhesion | C | C | C | C | D | D | D | D |

| | | | | | | | | | |
|---|---|---|---|---|---|---|---|---|---|
| *Bal. is an abbreviation of balance. | | | | | | | | | |

**Table 3**

| | | Comparative Example (Ink) | | | | | | | |
|---|---|---|---|---|---|---|---|---|---|
| | | 21 | 22 | 23 | 24 | 25 | 26 | 27 | 28 |
| Organic solvent | 1,3-Butanediol | 23.0 | 23.0 | 23.0 | | 23.0 | 23.0 | 23.0 | |
| | 1,5-Pentanediol | | | | 22.5 | | | | 22.5 |
| | Glycerin | 8.0 | 8.0 | 8.0 | 7.5 | 8.0 | 8.0 | 8.0 | 7.5 |
| | 2-Ethyl-1,3-hexanediol | 2.0 | 2.0 | 2.0 | 2.0 | 2.0 | 2.0 | 2.0 | 2.0 |
| | 2-Pyrrolidone | | | | 2.0 | | | | 2.0 |
| Resin | SUPERFLEX 150 | 4.0 | 4.0 | 4.0 | 4.0 | 5.0 | 5.0 | 5.0 | 5.0 |
| | MOVINYL 5450 | 10.0 | 10.0 | 10.0 | 10.0 | 6.0 | 6.0 | 6.0 | 6.0 |
| Polyoxy-alkylene alkyl ether | TRITON HW-1000 | | | | | | | | |
| Alkanediol | ENVIROGEM AD-01 | | | | | 0.5 | 0.5 | 0.5 | 0.5 |
| Silicone-based compound | TEGO Wet 270 | | | | | 0.5 | 0.5 | 0.5 | 0.5 |
| Fluoro surfactant | CAPSTONE FS-34 | 0.5 | 0.5 | 0.5 | 0.5 | | | | |
| Preservative and fungicide | PROXEL LV | 0.2 | 0.2 | 0.2 | 0.2 | 0.2 | 0.2 | 0.2 | 0.2 |
| pH regulator | 2-Amino-2-ethyl-1,3-propanediol | 0.3 | 0.3 | 0.3 | 0.3 | 0.3 | 0.3 | 0.3 | 0.3 |
| Pigment dispersion liquid | Yellow pigment dispersion liquid | 20.0 | | | | 20.0 | | | |
| | Magenta pigment dispersion liquid | | 20.0 | | | | 20.0 | | |
| | Cyan pigment dispersion liquid | | | 20.0 | | | | 20.0 | |
| | Black pigment dispersion liquid | | | | 20.0 | | | | 20.0 |
| Water | High pure water | Bal.* | Bal. | Bal. | Bal. | Bal. | Bal. | Bal. | Bal. |
| Total amount | | 100 | 100 | 100 | 100 | 100 | 100 | 100 | 100 |
| Polyoxyalkylene alkyl ether/ Silicone-based compound | | - | - | - | - | - | - | - | - |
| Evaluation results | Beading suppression | B | B | B | B | C | C | C | C |
| | Defoamability | D | D | D | D | C | C | C | C |
| | Discharge stability | C | C | C | C | B | B | B | B |
| | Nozzle adhesion | B | B | B | B | B | B | B | B |

| | | | | | | | | | |
|---|---|---|---|---|---|---|---|---|---|
| *Bal. is an abbreviation of balance. | | | | | | | | | |

## Claims

1. An ink comprising:
a polyoxyalkylene alkyl ether represented by General Formula (1) below;
an alkanediol; and
a silicone-based compound in an amount of 0.2% by mass or more but 1.0% by mass or less relative to a mass of the ink,
wherein a mass ratio of an amount of the polyoxyalkylene alkyl ether represented by the General Formula (1) to an amount of the silicone-based compound is 2.0 or more but 4.0 or less: 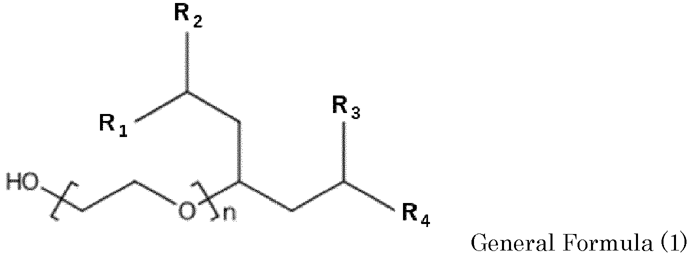
where R₁, R₂, R₃, and R₄ each independently represent a hydrogen atom or an alkyl group having 1 or more but 5 or less carbon atoms, and n represents an integer of 4 or more but 10 or less.

2. The ink according to claim 1, wherein the polyoxyalkylene alkyl ether represented by the General Formula (1) is a compound represented by General Formula (3) below: 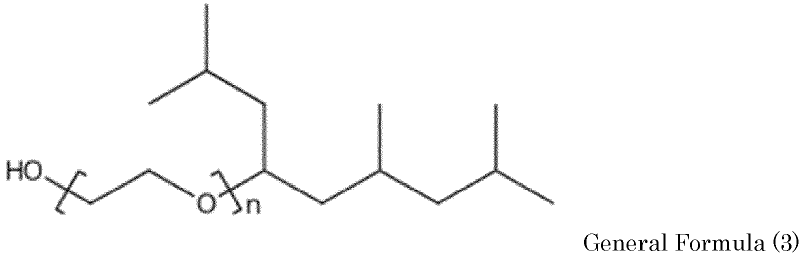 where n represents an integer of 4 or more but 10 or less.

3. The ink according to claim 1 or 2, wherein the alkanediol is a compound represented by General Formula (4) below: 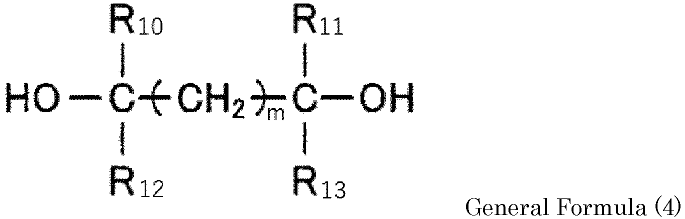 where R₁₀ and R₁₁ each independently represent an alkyl group having 3 or more but 6 or less carbon atoms, R₁₂ and R₁₃ each independently represent a methyl group or an ethyl group, and m represents an integer of 1 or more but 6 or less.

4. The ink according to any one of claims 1 to 3, wherein the alkanediol is 2,4,7,9-tetramethyl-4,7-decanediol.

5. The ink according to any one of claims 1 to 4, wherein an amount of the polyoxyalkylene alkyl ether represented by the General Formula (1) is 0.4% by mass or more but 2.0% by mass or less relative to a mass of the ink.

6. The ink according to any one of claims 1 to 5, wherein an amount of the alkanediol is 0.3% by mass or more but 1.0% by mass or less relative to a mass of the ink.

7. An ink stored container comprising
the ink according to any one of claims 1 to 6.

8. A printing device comprising:
the ink stored container according to claim 7; and
an ink applying unit configured to apply the ink stored in the ink stored container.

9. A printing method comprising
applying the ink according to any one of claims 1 to 6.

10. An ink set comprising:
the ink according to claim 1; and
a treatment liquid containing an aggregating agent to aggregate components contained in the ink.

## Patentansprüche

1. Tinte, Folgendes umfassend:
einen Polyoxyalkylenalkylether, dargestellt durch die nachstehende Allgemeine Formel (1);
ein Alkandiol; und
eine Verbindung auf Silikonbasis in einer Menge von 0,2 Gewichts-% oder mehr, aber 1,0 Gewichts-% oder weniger, bezogen auf ein Gewicht der Tinte,
wobei ein Gewichtsverhältnis einer Menge des Polyoxyalkylenalkylethers, dargestellt durch die Allgemeine Formel (1), zu einer Menge der Verbindung auf Silikonbasis 2,0 oder mehr, aber 4,0 oder weniger beträgt: 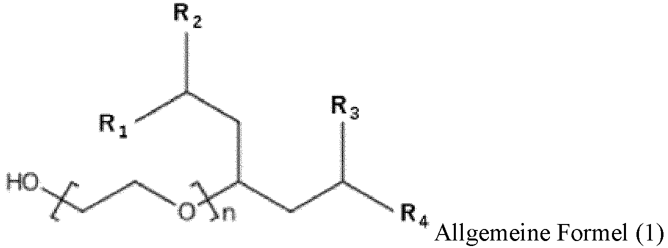
worin R₁, R₂, R₃ und R₄ jeweils unabhängig voneinander ein Wasserstoffatom oder eine Alkylgruppe darstellen, das/die 1 oder mehrere, aber 5 oder weniger Kohlenstoffatome aufweist, und n eine Ganzzahl von 4 oder mehr, aber 10 oder weniger darstellt.

2. Tinte nach Anspruch 1, wobei der Polyoxyalkylenalkylether, dargestellt durch die Allgemeine Formel (1), eine Verbindung ist, dargestellt durch die nachstehende Allgemeine Formel (3): 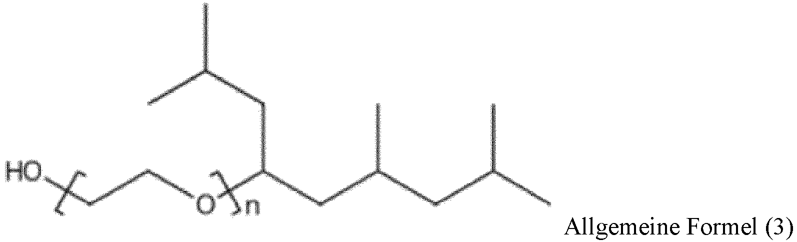 worin n eine Ganzzahl von 4 oder mehr, aber 10 oder weniger darstellt.

3. Tinte nach Anspruch 1 oder 2, wobei das Alkandiol eine Verbindung ist, die durch die nachstehende Allgemeine Formel (4) dargestellt wird: 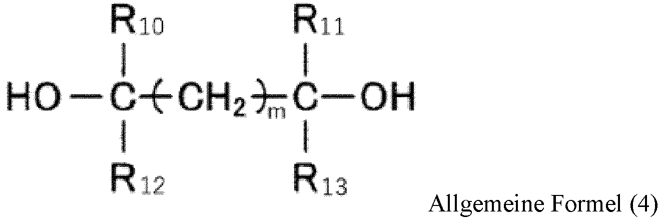 worin R₁₀ und R₁₁ jeweils unabhängig voneinander eine Alkylgruppe darstellen, die 3 oder mehr, aber 6 oder weniger Kohlenstoffatome aufweist, R₁₂ und R₁₃ jeweils unabhängig voneinander eine Methylgruppe oder eine Ethylgruppe darstellen, und m eine Ganzzahl von 1 oder mehr, aber 6 oder weniger darstellt.

4. Tinte nach einem der Ansprüche 1 bis 3, wobei das Alkandiol 2,4,7,9-Tetramethyl-4,7-decandiol ist.

5. Tinte nach einem der Ansprüche 1 bis 4, wobei eine Menge des Polyoxyalkylenalkylethers, dargestellt durch die Allgemeine Formel (1), 0,4 Gewichts-% oder mehr, aber 2,0 Gewichts-% oder weniger, bezogen auf ein Gewicht der Tinte, beträgt.

6. Tinte nach einem der Ansprüche 1 bis 5, wobei eine Menge des Alkandiols 0,3 Gewichts-% oder mehr, aber 1,0 Gewichts-% oder weniger, bezogen auf ein Gewicht der Tinte, beträgt.

7. Tintenspeicherbehälter, Folgendes umfassend:
die Tinte nach einem der Ansprüche 1 bis 6.

8. Druckvorrichtung, Folgendes umfassend:
den Tintenspeicherbehälter nach Anspruch 7; und
eine Tintenauftragseinheit, die konfiguriert ist, um die in dem Tintenspeicherbehälter gespeicherte Tinte aufzutragen,

9. Druckverfahren, Folgendes umfassend:
Auftragen der Tinte nach einem der Ansprüche 1 bis 6.

10. Tintensatz, Folgendes umfassend:
die Tinte nach Anspruch 1; und
eine Behandlungsflüssigkeit, die ein Aggregationsmittel enthält, um in der Tinte enthaltene Komponenten zu aggregieren.

## Revendications

1. Encre comprenant :
un éther alkylique de polyoxyalkylène représenté par formule générale (1) ci-dessous ;
un alcanediol ; et
un composé à base de silicone en une quantité de 0,2 % en masse ou plus mais de 1,0 % en masse ou moins par rapport à une masse de l'encre,
dans laquelle un rapport en masse entre une quantité de l'éther alkylique de polyoxyalkylène représenté par formule générale (1) et une quantité du composé à base de silicone est de 2,0 ou plus mais de 4,0 ou moins : 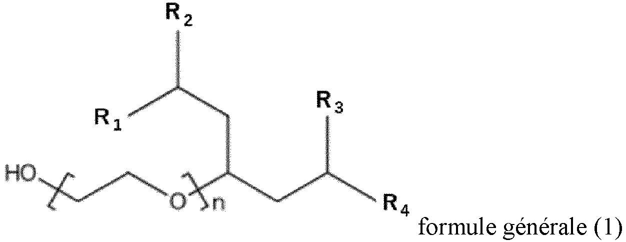
où R₁, R₂, R₃ et R₄ représentent chacun indépendamment un atome d'hydrogène ou un groupe alkyle présentant 1 ou plusieurs mais 5 ou moins atomes de carbone, et n représente un nombre entier de 4 ou plus mais de 10 ou moins.

2. Encre selon la revendication 1, dans laquelle l'éther alkylique de polyoxyalkylène représenté par formule générale (1) est un composé représenté par formule générale (3) ci-dessous : 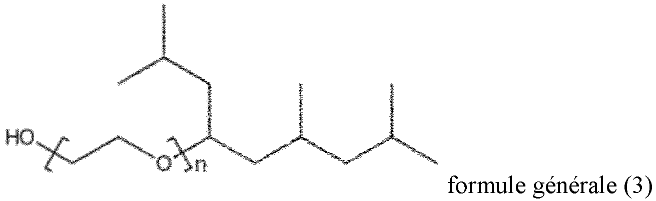 où n représente un nombre entier de 4 ou plus mais de 10 ou moins.

3. Encre selon la revendication 1 ou 2, dans laquelle l'alcanediol est un composé représenté par formule (4) ci-dessous : 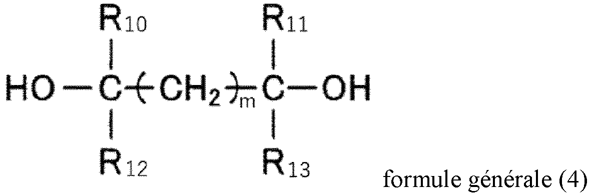 où R₁₀ et R₁₁ représentent chacun indépendamment un groupe alkyle présentant 3 ou plus mais 6 ou moins atomes de carbone, R₁₂ et R₁₃ représentent chacun indépendamment un groupe méthyle ou un groupe éthyle, et m représente un nombre entier de 1 ou plus mais de 6 ou moins.

4. Encre selon l'une quelconque des revendications 1 à 3, dans laquelle l'alcanediol est le 2,4,7,9-tétraméthyl-4,7-décanediol.

5. Encre selon l'une quelconque des revendications 1 à 4, dans laquelle une quantité de l'éther alkylique de polyoxyalkylène représenté par formule générale (1) est de 0,4 % en masse ou plus mais de 2,0 % en masse ou moins par rapport à une masse de l'encre.

6. Encre selon l'une quelconque des revendications 1 à 5, dans laquelle une quantité de l'alcanediol est de 0,3 % en masse ou plus mais de 1,0 % en masse ou moins par rapport à une masse de l'encre.

7. Récipient d'encre stockée comprenant
l'encre selon l'une quelconque des revendications 1 à 6.

8. Dispositif d'impression comprenant :
le récipient d'encre stockée selon la revendication 7 ; et
une unité d'application d'encre configurée pour appliquer l'encre stockée dans le récipient d'encre stockée.

9. Procédé d'impression comprenant
l'application de l'encre selon l'une quelconque des revendications 1 à 6.

10. Kit d'encre comprenant :
l'encre selon la revendication 1 ; et
un liquide de traitement contenant un agent d'agrégation pour agréger des composants contenus dans l'encre.
